# EUROPÄISCHE PATENTANMELDUNG

(11) **EP 0 551 895 A1**
(43) Veröffentlichungstag der Anmeldung: **21.07.1993**
(21) Anmeldenummer: 93100470.9
(22) Anmeldetag: 14.01.1993
(51) Int. Cl.: H02P 3/06

(54) **Verlustarme Bremsschaltung**

(30) Priorität: 16.01.1992 DE 4200996
(71) Anmelder: HEINRICH KOPP AG, D-63796 Kahl am Main (DE)
(72) Erfinder: HEINRICH KOPP AG, D-63796 Kahl am Main (DE)
(74) Vertreter: Rüger, Rudolf, Dr.-Ing.

(57) **Zusammenfassung**

Ein kleiner Universalmotor mit Anker (3) und Feldwicklung (6), wie er zum Antrieb von handgeführten Geräten verwendet wird, wird zum elektrischen Bremsen als Hauptschlußgenerator betrieben, wobei der Bremswiderstand (32) in Serie mit der Feldwicklung (6) und dem Anker (3) geschaltet ist. Parallel zu dem Bremswiderstand (32) oder einem Teil davon liegt ein geschalteter Halbleiter (35), der durch eine Steuerschaltung (41) mit Schmitt-Trigger-Charakteristik ständig zwischen zwei Zuständen hin- und hergeschaltet wird. Dabei ist das Abschaltkriterium des Leistungstransistors (35) das Erreichen eines vorgegebenen Erregerstroms, während das Einschaltkriterium das Unterschreiten einer vorgegebenen Spannung ist, die von der Ankerspannung und der Spannung der Feldwicklung (6) abhängig ist.

## Beschreibung

Die Erfindung betrifft eine getaktete, verlustarme Bremsschaltung mit den Merkmalen des Anspruches 1.

Aus der Patentanmeldung P 40 22 637 ist eine getaktete Bremsschaltung für kleine Universalmotoren bis ca.3 kW bekannt, die einen Anker und eine Feldwicklung aufweisen. Mit Hilfe einer Umpoleinrichtung wird die Phasenlage der Feldwicklung gegenüber dem Anker verpolt, um nach dem Motorbetrieb eine Phasenlage der Feldwicklung zu erhalten, die eine Selbsterregung ermöglicht. In Serie mit der Reihenschaltung aus dem Anker und der Feldwicklung liegt ein Leistungshalbleiter, der mit Hilfe einer Steuerschaltung getaktet ein- und ausgeschaltet wird. Die Steuerschaltung gibt an den Leistungshalbleiter ein pulsweitenmoduliertes Signal ab und enthält hierzu einen Oszillator , in den zur Steuerung der Pulsweite ein Signal eingespeist wird, das an einem Stromfühler im Bremskreis abgegriffen wird.

Ausgehend hiervon ist es Aufgabe der Erfindung, eine getaktete Bremsschaltung für kleine Universalmotoren zu schaffen, die ohne Oszillator gesteuert wird.

Diese Aufgabe wird erfindungsgemäß durch die Schaltungsanordnung mit den Merkmalen des Anspruches 1 gelöst.

Die Steuerschaltung mit Schmitt-Trigger-Charakteristik paßt sich weitgehend selbsttätig an die verschiedenen Lastsituationen und Motorparameter an, ohne daß eine spezielle Abstimmung erforderlich ist. Außerdem kann mit der neuen Lösung eine Schaltung aufgebaut werden, die mit sehr wenigen zusätzlichen Bauteilen auskommt und verhältnismäßig genau den vorgegebenen Verlauf des Bremsstromes einhält. Beispielsweise können günstige Werte bei der Bremsung erreicht werden, wenn der Bremsstrom durch die Steuerschaltung konstant gehalten wird, was mit der neuen Schaltung ohne weiteres möglich ist. Auch wird ein Abreißen der Selbsterregung wirksam ausgeschlossen, weil über den Rückführungseingang nicht nur die Schmitt-Trigger-Charakteristik hergestellt wird, sondern auch die Steuerschaltung in den anderen Betriebszustand umgeschaltet wird, in der der Erregerstrom durch Einschalten des Leistungshalbleiters wieder erhöht wird. Der Bremsstrom schwankt dadurch zwischen zwei Grenzwerten hin und her, und zwar wird der Leistungshalbleiter abgeschaltet, sobald der Erregerstrom, der gleichzeitig auch Bremsstrom ist, einen vorgegebenen Maximalwert erreicht und umgekehrt erfolgt die Einschaltung des Leistungshalbleiters, sobald die Summenspannung aus Anker-EMK und Spannung an der Feldwicklung einen festgelegten Wert unterschreitet.

Infolge des geschalteten Betriebs sorgt die Induktivität der Feldwicklung und des Ankers für einen weitgehend rippelfreien Verlauf des Bremsstromes. Außerdem ist der Wert des Bremswiderstandes in weiten Grenzen frei wählbar.

Der Stromfühler zum Steuern der Steuerschaltung ist im einfachsten Falle ein ohmscher Widerstand, der je nach Beschaltung des Leistungshalbleiters und des Bremswiderstandes entweder nur bei geschlossenem Leistungshalbleiter oder immer mit dem Bremsstrom beaufschlagt ist.

Als Leistungshalbleiter kommt vorzugsweise ein selbstsperrender Mosfet in Frage, der den Vorteil geringer Steuerleistungen bietet, die von der Steuerschaltung aufgebracht werden müssen, um den Mosfet zwischen den beiden Schaltzuständen hin- und herzuschalten. Die geringe Leistungsaufnahme vereinfacht die Erzeugung einer hinreichend konstanten Steuerspannung für den Leistungshalbleiter, obwohl die zur Verfügung stehende Spannung, die ausschließlich von dem im Generator und damit im Bremsbetrieb laufenden Universalmotor herkommt, mit der Drehzahl sehr stark abnimmt.

In seiner einfachsten Ausführungsform enthält die Steuerschaltung lediglich einen bipolaren Steuertransistor, dessen Basis über einen Widerstand einerseits mit dem Eingang und damit mit dem Stromfühler verbunden ist und dessen Basis andererseits über einen weiteren ohmschen Widerstand an dem Rückkopplungseingang liegt. Der Kollektor des bipolaren Transistors, der auch durch einen entsprechenden Feldeffekttransistor ersetzt werden kann, bildet den Ausgang, an den der Steuereingang des Leistungshalbleiters angeschlossen ist.

Die Leistungsaufnahme der Steuerschaltung läßt sich bei gleichzeitiger Versteilerung des Schaltverhaltens des Leistungshalbleiters verbessern, wenn zur Erzeugung der Ausgangsspannung eine gesteuerte Stromquelle verwendet wird, die mit dem Steuertransistor zusammenwirkt. Diese gesteuerte Stromquelle enthält einen selbstleitenden Feldeffekttransistor, dessen Source-Elektrode über eine Vorspannung erzeugende Bauelemente mit dem Ausgang der Steuerschaltung verbunden ist und dessen Gateelektrode über eine Widerstands/Diodenanordnung an dem Ausgang der Steuerschaltung liegt, wobei der Kollektor des Steuertransistors an das Gate des selbstleitenden Feldeffekttransistors angeschlossen ist.

Um eine Schaltverzögerung des Steuertransistors weitgehend auszuschließen, die die Folge einer Übersteuerung dieses Transistors ist, liegt bevorzugt parallel zu dessen Kollektorbasisstrecke eine Schottky-Diode.

Die maximale Ausgangsspannung kann im einfachsten Falle durch eine Z-Diode begrenzt werden, die mit dem Eingang der Steuerschaltung verbunden ist und andernends an den Kollektor des Steuertransistors angeschlossen ist.

In der Zeichnung sind Ausführungsbeispiele des Gegenstandes der Erfindung dargestellt. Es zeigen:
- Fig. 1: eine Schaltungsanordnung zum Bremsen eines Universalmotors,
- Fig. 2: das Prinzipschaltbild des in den Bremsbetrieb umgeschalteten Universalmotors nach Fig. 1, unter Weglassung aller Bauelemente, die zum Umschalten bzw. im Motorbetrieb erforderlich sind und mit einem detaillierten Schaltbild der Steuerschaltung und
- Fig. 3: eine Schaltungsanordnung ähnlich Fig. 2 mit einer anderen Ausführungsform der Steuerschaltung.

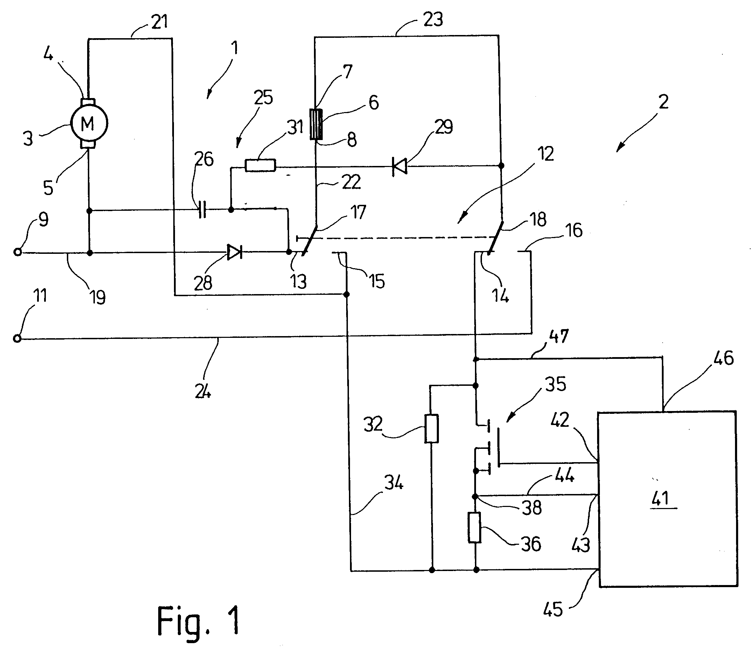

Fig. 1 zeigt einen Universalmotor 1, an den eine Schaltungsanordnung 2 zum netzunabhängigen elektrischen Bremsen angeschlossen ist. Der Universalmotor 1 weist einen Anker 3 mit zwei Kollektoranschlüssen 4, 5 sowie eine Feldwicklung 6 mit Anschlüssen 7 und 8 auf. Die veranschaulichte Feldwicklung 6 kann entweder die gesamte Feldwicklung des Universalmotors 1 sein oder nur ein Teil, und zwar derjenige Teil, der bei der Umschaltung vom Motor in den Generatorbetrieb verwendet wird. Wie sich aus der nachfolgenden Beschreibung weiter unten ergibt, ist es beim Bremsen sowohl möglich, die gesamte Feldwicklung als auch nur einen Teil davon zu verwenden.

Im Motorbetrieb bezieht der Universalmotor 1 seinen Strom über zwei Netzanschlußklemmen 11 sowie einen zweipoligen Umschalter 12, der zwei Ruhekontakte 13 und 14, zwei Arbeitskontakte 15 und 16 sowie zwei bewegliche Kontakte 17 und 18 aufweist.

Die Netzanschlußklemme 9 ist über eine Leitung 19 mit dem Anschluß 5 des Ankers 3 verbunden. Von dem Anschluß 4 führt eine Leitung 21 zu dem Arbeitskontakt 15 und es ist der bewegliche Kontakt 17 über eine Leitung 22 an den Anschluß 8 der Feldwicklung 6 angeschlossen. Der andere Anschluß 7 der Feldwicklung 6 liegt mit Hilfe einer Leitung 23 an dem beweglichen Kontakt 18 des Umschalters 12, dessen Arbeitskontakt 16 schließlich über eine Leitung 24 mit der anderen Netzanschlußklemme 11 verbunden ist.

Wenn der zweipolige Umschalter 12 aus der in Fig. 1 gezeigten Ruhestellung in die Arbeitsstellung überführt wird, werden die beiden Netzanschlußklemmen 9 und 11 elektrisch mit dem als Hauptschlußmotor geschalteten Universalmotor 1 verbunden, um diesen in Gang zu setzen.

In der gezeigten Ruhestellung dagegen ist die Bremsschaltung 2 mit dem Universalmotor 1 verbunden. Die Bremsschaltung 2 enthält eine Speicherschaltung 25, um nach dem Abschalten des Motorbetriebs dafür zu sorgen, daß eine Selbsterregung mit der richtigen Polarität entsteht, selbst dann, wenn der Restmagnetismus in der Feldwicklung 6 für eine Selbsterregung nicht mehr ausreichen sollte oder eine falsche Polarität hat. Die Speicherschaltung enthält als Speicherelement einen Speicherkondensator 26, der einenends unmittelbar mit dem Anschluß 5 des Ankers 3 verbunden ist und der andernends mit dem Ruhekontakt 13 in Verbindung steht. Parallel zu dem Kondensator 26 liegt eine Diode 28, die in später noch beschriebener Weise nach der Einleitung der Selbsterregung den Strom übernimmt.

Um den Speicherkondensator 26 aufzuladen, ist eine Diode 29 vorhanden, deren Anode an der Leitung 23 liegt und deren Kathode über einen Strombegrenzungswiderstand 31 mit der Verbindungsstelle zwischen dem Speicherkondensator 26 und dem Ruhekontakt 13 in Verbindung steht.

Die kinetische Energie des Ankers 3 wird beim elektrischen Bremsen von einem Bremswiderstand 32 in Wärme umgesetzt. Dieser Bremswiderstand 32 ist einenends unmittelbar mit dem Ruhekontakt 14 verbunden und anderenends an einer Leitung 34 angeschaltet, die zu dem Arbeitskontakt 15 führt; sie stellt für den Bremsbetrieb das Bezugspotential dar. Parallel zu dem Bremswiderstand 32 liegt die Serienschaltung aus einem selbstsperrenden Mosfet 35 sowie einem als Stromfühler dienenden Widerstand 36. Dabei führt die Drain-Elektrode des Mosfet 35 zu dem Ruhekontakt 14 und die Source-Elektrode zu dem Widerstand 36, wobei die Verbindungsstelle ein mit 38 bezeichneter Schaltungsknoten ist.

Der Mosfet 35 dient als Stellglied zur Regelung des Bremsstromes und wird mittels einer Steuerschaltung 41 alternierend ein- und ausgeschaltet. Die Steuerschaltung 41 weist einen Ausgang 42 auf, der mit der Gate-Elektrode des Mosfet 35 verbunden ist. Ferner hat die Steuerschaltung 41 einen Eingang 43, der über eine Leitung 44 an dem Knoten 38 angeschaltet ist. Das Bezugspotential auf der Leitung 34 gelangt zu einem Anschluß 45 und schließlich ist ein Rückkopplungseingang 46 vorhanden, der über eine Leitung 47 an dem Ruhekontakt 14 liegt.

Die Wirkungsweise der insoweit beschriebenen Anordnung ist wie folgt: Wenn der Universalmotor 1 in Betrieb gesetzt werden soll, um an seiner Ankerwelle mechanische Nutzleistung abzugeben, wird der zweipolige Umschalter 12 aus der in Fig. 1 gezeigten Ruhestellung in die Arbeitsstellung überführt, in der der Arbeitskontakt 15 mit dem beweglichen Kontakt 17 und der Arbeitskontakt 16 mit dem beweglichen Kontakt 18 in Verbindung steht. In dieser Stellung des zweipoligen Umschalters 12 fließt der an den Netzeingangsklemmen 9 und 11 eingespeiste Wechselstrom über die Leitung 24, den zweipoligen Umschalter 12, die Leitung 23 zu der Feldwicklung 6 und von dort wiederum über den zweipoligen Umschalter 12 zu dem Anker 3 über die Leitung 21. Dabei ist im Motorbetrieb der Anschluß 8 der Feldwicklung 6 mit dem Anschluß 4 des Ankers 3 verbunden. Von dem Anker 3 fließt schließlich der Strom über die Leitung 19 zu der Netzanschlußklemme 9 zurück.

Gleichzeitig wird während des Motorbetriebs bei der entsprechenden Halbwelle der an den Netzeingangsklemmen 9 und 11 liegenden Netzspannung über die Diode 29 und den Vorwiderstand 31 der Kondensator 26 aufgeladen, da die Serienschaltung aus den erwähnten Bauelementen zu dem Motor elektrisch parallelgeschaltet ist. Bei der gezeigten Polarität der Diode 29 erfolgt die Ladung in der Weise, daß die an dem Anschluß 5 des Ankers 3 liegende Elektrode des Kondensators 26 negativ gegenüber jener Elektrode aufgeladen wird, die mit den beiden Widerständen 27 und 31 in Verbindung steht.

Wenn nun der Motorbetrieb durch Umschalten des zweipoligen Umschalters 12 in die in Fig. 1 gezeigte Ruhestellung beendet wird, wird zunächst einmal die Stromversorgung aus den Netzanschlußklemmen 9 und 11 unterbrochen. Gleichzeitig wird eine Serienschaltung hergestellt, die den Anker 3, die Feldwicklung 6 sowie den Bremswiderstand 32 enthält, wobei die Polarität, mit der die Feldwicklung 6 mit dem Anker 3 in Verbindung steht, gewechselt wird. Während im Motorbetrieb der Anschluß 4 des Ankers 3 mit dem Anschluß 8 der Feldwicklung 6 unmittelbar verbunden war, ist im Bremsbetrieb der Anschluß 5 des Ankers 3 über die Diode 28 sowie die Leitung 22 mit dem Anschluß 8 der Feldwicklung 6 verknüpft. Zu der Diode 28 liegt der Speicherkondensator 26 parallel und der parallel und der Speicherkondensator 26 kann sich entladen, wobei der Entladestrom über den geschlossenen Schalterkontakt 13, 17 sowie die Leitung 22 zu der Feldwicklung 6 fließt. Von der Feldwicklung 6 fließt der Entladestrom über die Leitung 23 zu dem geschlossenen Schalterkontakt 14, 18 und von dort zu dem Bremswiderstand 32. Aus dem Bremswiderstand 32 fließt der Strom sodann über die Leitung 34, die Leitung 21 zu dem Anker 3, der mit seinem Anschluß 5 mit dem Speicherkondensator 26 in Verbindung steht. Außerdem gelangt die an der Leitung 23 anstehende Spannung gegenüber dem Bezugspotential auf der Leitung 34 in die Steuerschaltung 41, die umgehend den Mosfet 35 in den leitenden Zustand steuert, weil der Strom, der in dem Bremskreis fließt, an dem Widerstand 36 einen Spannungsabfall erzeugt, der unterhalb des Schwellwertes liegt, der für ein Abschalten des Transistors 35 sorgt.

Da der Kondensator 26 jedes Mal im Motorbetrieb über die Diode 29 mit derselben Polarität aufgeladen wird, fließt auch der Entladestrom durch die Feldwicklung 6 jedes Mal im Bremsbetrieb in derselben Richtung, d.h. der Universalmotor 1 wird jedes Mal beim Abschalten des Motorbetriebs und dem Umschalten in den Generatorbetrieb mit derselben Polarität erregt.

Infolge des durch die Feldwicklung 6 fließenden Stroms erzeugt der Anker 3 eine Generatorspannung, die in der angeschlossenen Schaltung zu einem Strom führt, der dieselbe Richtung hat wie der Entladestrom des Kondensators 26. Der von der Anker-EMK hervorgerufene Strom fließt zusätzlich über die Diode 28, aber ansonsten auf demselben Weg wie der vorher erwähnte Entladestrom des Kondensators 26. Der niederohmig geschaltete Transistor 35 sorgt für die Selbsterregung des als Hauptschlußgenerator geschalteten Universalmotors 1.

Der in dem Kreis fließende Erregerstrom, der gleichzeitig auch der Bremsstrom ist, erzeugt an dem Widerstand 36 einen Spannungsabfall, der als Steuerspannung gegenüber dem Bezugspotential auf der Leitung 34 in den Eingang 43 eingespeist wird.

Wegen des geringen Kreiswiderstandes steigt der Erregerstrom zunehmend an, bis der Spannungsabfall an dem Widerstand 36 einen vorgegebenen Grenzwert erreicht. Diese nun erreichte Spannung an dem Widerstand 36 veranlaßt die Steuerschaltung 41, an ihrem Ausgang 42 ein Signal abzugeben, das den Transistor 35 sperrt. Dadurch fällt die Spannung an dem Widerstand 36 weg. Über den Rückkopplungseingang 46 bleibt die Steuerschaltung 41 jedoch in dem vorerwähnten Schaltzustand, bis die dort anstehende Spannung unter einen anderen vorgegebenen Grenzwert gefallen ist. Der Grenzwert dieser Spannung entspricht beim Wiedereinschalten des Transistors 35 einem Strom durch den Widerstand 36 kleiner jenem Strom, der vorher einen Spannungsabfall an dem Widerstand 36 erzeugt hat, der die Steuerschaltung 41 zum Abschalten des Transistors 35 veranlaßte.

Beim Abschalten des Transistors 35 erfolgt eine Übernahme des aus der Leitung 23 fließenden Stromes auf den Bremswiderstand 32. Allerdings tritt bei der Kommutierung des Stroms auf den Bremswiderstand 32 keine Amplitudenänderung ein, denn die Induktivitäten des Ankers 3 und der Feldwicklung 6 erzeugen beim Abschalten des Transistors 35 eine Induktionsspannung, die letztlich zum Aufrechterhalten des Bremsstromes durch den Widerstand 32 führt, und zwar bei einer entsprechend erhöhten Spannung zwischen der Leitung 34 und der Leitung 23. Diese nach dem Umschalten höhere Spannung wird in der Steuerschaltung 41 einerseits dazu ausgenutzt, um zunächst den Sperrzustand des Transistors 35 aufrechtzuerhalten und andererseits zu erkennen, wann der Erregerstrom so weit abgesunken ist, daß ein erneutes Anfachen bzw. Hochsetzen des Erregerstromes durch Einschalten des Transistors 35 angezeigt ist.

Bei der beschriebenen Schaltungsanordnung wechseln ständig zwei Betriebszustände einander ab, wobei in dem einen Betriebszustand der Erreger- oder Bremsstrom durch den Transistor 35 fließt, womit Bremsleistung nur in den ohmschen Widerständen des Ankers 3,der Feldwicklung 6, dem Kollektor und anderen ohmschen Verbrauchern umgesetzt wird und einem Betriebszustand, in dem der Transistor 35 gesperrt ist, so daß der Brems- oder Erregerstrom über den Bremswiderstand 32 fließt. In diesem Betriebszustand ist der Kreiswiderstand deutlich größer und es wird in dem Bremswiderstand 32 zusätzlich elektrische Energie in Wärme umgesetzt.

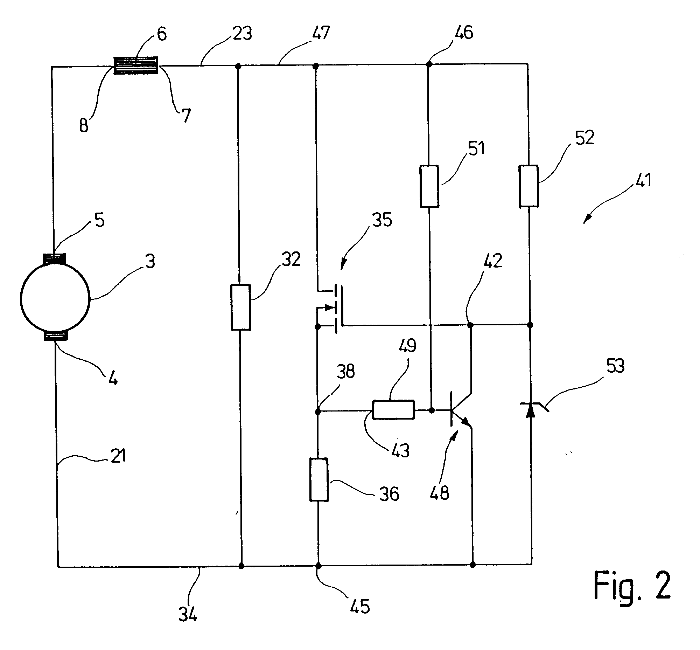

Einen möglichen Aufbau der Steuerschaltung 41 nach Fig. 1 zeigt Fig. 2, wobei hinsichtlich des Universalmotors 1 eine Vereinfachung vorgenommen ist, insofern, als der Zustand im Bremsbetrieb gezeigt ist und die Bauelemente, die zum Einleiten der Selbsterregung und zum Umpolen der Feldwicklung erforderlich sind, aus Vereinfachungsgründen weggelassen sind. Im übrigen sind für die Bauelemente, die aus Fig. 1 wiederkehren, dieselben Bezugszeichen verwendet.

Die Steuerschaltung 41 enthält einen bipolaren Steuertransistor 48, dessen Emitter auf dem Bezugspotential liegt und deswegen an den Anschluß 45 angeklemmt ist. Die Basis des Transistors 48 ist über einen Widerstand 49 an den Eingang 43 der Steuerschaltung 41 angeschlossen. Der Kollektor des Transistors 48 liegt schließlich an dem Ausgang 42 und somit an dem Gate des selbstsperrenden Mosfet 35. Ein weiterer Widerstand 51 verbindet die Basis des bipolaren Steuertransistors 48 mit dem Rückkopplungseingang 46.

Schließlich liegt zwischen dem Rückkopplungseingang 46 und dem Anschluß 45 eine Serienschaltung aus einem Widerstand 52 und einer Z-Diode 53. Die Z-Diode 53 ist anodenseitig mit dem Anschluß 45 verbunden und kathodenseitig an den Ausgang 42 angeschlossen.

Zur Erläuterung der Funktionsweise sei unterstellt, daß die Selbsterregung bereits begonnen hat einzusetzen, wie dies im Zusammenhang mit Fig. 1 erläutert ist. Unmittelbar nach dem Anfachen der Selbsterregung bzw. beim Anfachen ist zunächst einmal der Transistor 35 gesperrt. Da aber sofort zwischen den Leitungen 47 und 34 eine Spannung entsteht, die größer ist als die Spannung, die notwendig ist, um den selbstsperrenden Mosfet 35 in den leitenden Zustand zu steuern, gelangt über den Widerstand 52 auf das Gate des Mosfet 35 eine Spannung, die ihn durchsteuert. Der obere Wert dieser den Mosfet 35 einschaltenden Spannung wird durch die Z-Diode 53 auf deren Nennwert gegenüber dem Bezugspotential auf der Leitung 34 festgeklemmt. Damit ist umgehend, wie im Zusammenhang mit Fig. 1 erwähnt, der Transistor 35 leitend und der Erregerstrom kann sich aufbauen. Er fließt dabei zusätzlich über den Widerstand 36 und ruft dort eine proportional steigende Spannung hervor, die ständig über den Widerstand 49 von dem Transistor 48 gemessen wird. Infolge des durchgesteuerten Transistors 35 liegt an dem Rückkopplungseingang 46 eine Spannung an, die nicht ausreicht, um über den Widerstand 51 den Transistor 48 aufzusteuern. Die Spannung an dem Rückkopplungseingang 46 gegenüber dem Bezugspotential 45 wird über die Serienschaltung der Widerstände 51, 49 und 36 entsprechend heruntergeteilt. Es kann deswegen davon ausgegangen werden, daß die Steuerung des Steuertransistors 48 in dieser Betriebsphase im wesentlichen nur abhängig ist von dem Spannungsabfall an dem Widerstand 36.

Sobald der Bremsstrom durch den Widerstand 36 so weit angestiegen ist, daß er den Transistor 48 aufzusteuern vermag, wird das Potential an dem Ausgang 42 von dem nunmehr durchgesteuerten Steuertransistor 48 auf das Potential der Leitung 34 gezogen. Die Folge ist ein umgehendes Abschalten des Transistors 35. Das Abschalten des Transistors 35 hat in den Induktivitäten des Ankers 3 und der Feldwicklung 6 einen Spannungsanstieg zur Folge. Dieser Spannungsanstieg ist so groß, daß anschließend durch den Widerstand 32 derselbe Strom fließt wie unmittelbar vorher durch den Widerstand 36. Diese nunmehr wesentlich höhere Spannung gelangt über den Rückkopplungseingang 46 auf die Basis des Transistors 48 und reicht aus, um den Transistor 48 im durchgesteuerten Zustand zu halten, obwohl wegen des Abschaltens des Transistors 35 an dem Widerstand 36 kein Spannungsabfall mehr auftritt. Der Universalmotor 1 wird nun entsprechend der in dem Widerstand 32 umgesetzten elektrischen Leistung abgebremst. Das Sinken der Motordrehzahl führt zu einer Verringerung der Anker-EMK und damit der Spannung an dem Rückkopplungseingang 46.

Nach einer entsprechenden Zeit sind die Drehzahl des Ankers 3 und damit die Anker-EMK sowie die Induktionsspannung an der Feldwicklung 6 unter einen Wert gefallen, der in der Lage ist, den Transistor 48 durchgesteuert zu halten. Der Transistor 48 geht sodann wieder in den Sperrzustand über, d.h. die Spannung an dem Ausgang 42 springt wiederum auf eine von der Z-Diode 53 festgelegte Spannung gegenüber dem Bezugspotential auf der Leitung 34. Die Folge hiervon ist ein Durchsteuern des Transistors 35, wodurch ein erneutes Hochlaufen des Erregerstromes möglich wird, bis der Spannungsabfall an dem Widerstand 36 erneut die vorerwähnte Schaltschwelle erreicht.

Ersichtlicherweise wird durch die Steuerschaltung 41 beim ersten Einleiten der Selbsterregung umgehend der Transistor 35 durchgesteuert, um möglichst schnell den Nennwert des Erreger- bzw. des Bremsstromes zu erzeugen. Sobald der Bremsstrom eine vorgegebene obere Schranke erreicht hat, wird der Transistor 35 gesperrt und der Bremsstrom kommutiert auf den Bremswiderstand 32. Hierdurch steigt die Spannung am Rückkopplungseingang an, weshalb die Steuerschaltung 41 zunächst den gesperrten Zustand des Transistors 35 aufrecht erhält, bis die Spannung an dem Bremswiderstand 32 eine vorgegebene untere Schranke unterschreitet.

Der Motor wird auf diese Weise mit konstantem Bremsstrom gebremst, wobei mit sinkender Ankerdrehzahl die Zeitintervalle, während derer der Transistor 35 leitend gesteuert ist, zunehmend wachsen.

Die Serienschaltung aus dem Widerstand 52 und der Z-Diode 53 wird bei der Anordnung nach Fig. 2 unter sehr ungünstigen Bedingungen betrieben. Einerseits muß der Strom durch den Widerstand 52 auch bei ungünstigen Bedingungen hinreichend groß sein können, damit schnell genug die Gatekapazität des Transistors 35 umgeladen werden kann, um ein schnelles Umschalten des Transistors 35 zu erhalten. Andernfalls würde seine Verlustleistung unnötig stark ansteigen. Andererseits sollte er möglichst groß gewählt werden, um die Verlustleistung in dem Widerstand 52 und der Z-Diode 53 möglichst klein zu halten. Dabei ist zu bedenken, daß der Transistor 35 als selbstsperrender Mosfet nur während der Umschaltphasen einen Strom benötigt und sonst nicht. Zwar spielt im großen und ganzen gesehen die Stromaufnahme der Steuerschaltung 41 aus der Sicht des Bremsbetriebes keine Rolle, doch sollten die Verlustleistungen an den einzelnen Bauelementen mit Rücksicht auf eine gedrängte Bauweise, beispielsweise wegen der Unterbringung in dem Handgriff einer handgeführten Maschine, möglichst klein sein, damit die Bremsleistung zu ihrem ganz überwiegenden Teil in dem Bremswiderstand 32 umgesetzt wird.

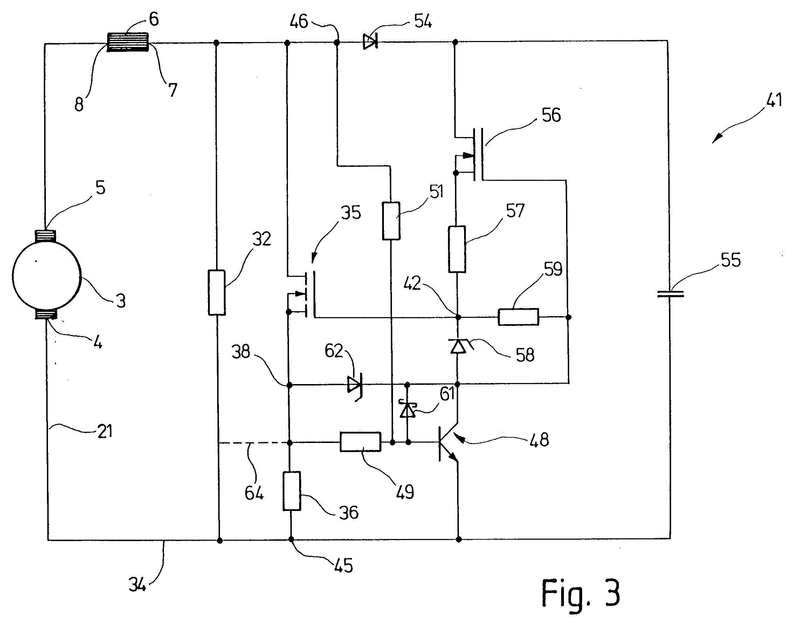

Eine Steuerschaltung, die dem speziellen Strombedarf des Transistors 35 Rechnung trägt, ist in Fig. 3 gezeigt. Auch hierbei ist der Universalmotor 1 in seiner Anschaltung für den Bremsbetrieb gezeigt und es sind alle Bauteile weggelassen, die zum Umschalten aus dem Motorbetrieb in den Bremsbetrieb oder zum Einleiten der Selbsterregung erforderlich sind. Im übrigen sind wiederkehrende Bauelemente mit denselben Bezugszeichen versehen.

An den Rückkopplungseingang 46 ist anodenseitig eine Diode 54 angeschaltet, mit deren Hilfe ein an ihrer Kathode angeschalteter Ladekondensator 55 aufgeladen wird, der anderenends mit dem Anschluß 45 verbunden ist. Der Ladekondensator 55 wird auf diese Weise auf die Spitzenspannung an dem Rückkopplungseingang 46 aufgeladen.

An die Kathode der Diode 54 ist ferner ein selbstleitender Mosfet 56 mit seiner Drain-Elektrode angeklemmt. Seine Source-Elektrode ist über einen Widerstand 57 mit dem Ausgang 42 verbunden, von dem eine Z-Diode 58 zu dem Kollektor des Steuertransistors 48 führt. Die Gate-Elektrode des Transistors 56 liegt einerseits über einen Widerstand 59 an dem Ausgang 42 und andererseits unmittelbar an dem Kollektor des Steuertransistors 48. Dessen Kollektorbasisstrecke ist über eine Schottky-Diode geshuntet. Schließlich führt eine Z-Diode 62 von dem Kollektor des Steuertransistors 48 zu dem Eingang 38.

Zur Erläuterung der Funktionsweise sei wiederum angenommen, daß die Selbsterregung eingeleitet werden soll, wozu der Transistor 35 durchgesteuert werden muß. Sobald an dem Rückkopplungseingang 46 eine hinreichend große Spannung ansteht, fließt ein Strom durch den selbstleitenden Feldeffekttransistor 46 zu dem Ausgang 42, wodurch der Transistor 35 umgehend aufgesteuert wird. Dieser Strom durch den selbstleitenden Transistor 46 fließt solange, bis infolge des Spannungsanstiegs die Z-Dioden 58 und 62 leitend geworden sind. Dadurch entsteht zwischen der Source-Elektrode und dem Gate des Transistors 46 eine den Transistor 46 sperrende negative Gatevorspannung, die den Transistor 56 bis auf einen kleinen Reststrom sperrt. Die Gatekapazität des Transistors 35 ist aufgeladen und hält den Transistor 35 im leitenden Zustand. Nun kann, wie vorerwähnt, der Bremsstrom durch den Widerstand 36 ansteigen, bis die Schaltschwelle für den Transistor 48 überschritten wird. Der Transistor 48 wird dadurch leitend und er entlädt über die Z-Diode 58 die Gatekapazität des Transistors 35, so daß dieser sperrt. Hierdurch kommutiert, wie vorstehend mehrfach erwähnt, der Bremsstrom auf den Bremswiderstand 32.

Die Größe der Nennspannung der Z-Diode 58 ist so gewählt, daß bei einem Durchsteuern des Transistors 48 der Transistor 35 zuverlässig gesperrt wird, andererseits aber auch die erforderliche negative Gatevorspannung für den Transistor 56 erzeugt werden kann. Der Widerstand 57 begrenzt während der stromleitenden Phase des Transistors 56 den fließenden Gatestrom für den Transistor 35 und hat in dessen Sperrzustand praktisch keinen Einfluß auf das Betriebsverhalten der Schaltung.

Während der Entladung der Gatekapazität des Transistors 35 ändert der Transistor 56 nicht seinen Betriebszustand, da in jedem Falle über die Z-Diode 48 die zum Sperren des Transistors 56 notwendige negative Gatevorspannung erzeugt wird. Auch dann, wenn schließlich die Gatekapazität 35 entladen ist, bleibt der Sperrzustand des Transistors 56 erhalten.

Nach dem Abschalten des Stroms durch den Widerstand 36 bleibt der Transistor 48, wie vorerwähnt, über die Rückkopplung durch den Widerstand 51 leitend. Die zwischen Kollektor und Basis des Transistors 48 liegende Schottky-Diode 61 verhindert in bekannter Weise die Sättigung des Transistors 48 und ermöglicht ein schnelleres Schalten.

Wenn nun die Spannung an dem Rückkopplungseingang 46 weit genug abgesunken ist, kann der Transistor 48 nicht mehr aufgesteuert gehalten werden und geht in den Sperrzustand über. In diesem Zustand liegt gleichsam ein Ende der Gatekapazität des Transistors 35 auf dem Bezugspotential der Leitung 34 und klemmt somit die Spannung an dem Ausgang 42 kurzfristig auf dieses Bezugspotential. Dadurch verschwindet jeglicher Strom durch die Z-Diode 58 und in der Folge auch die negative Gatevorspannung für den Transistor 56. Seine Gate- und seine Source-Elektrode liegen über die Widerstände 57 und 59 praktisch auf gleichem Potential und der Transistor 56 wird leitend. Er lädt entsprechend der Bemessung des Widerstandes 57 die Gatekapazität des Transistors 35 auf, der dadurch leitend wird. Dieser Zustand hört auf, sobald die Spannung an dem Gate des Transistors 35 weit genug angestiegen ist, damit auch die Diode 58 wieder leitend werden kann, um die negative Gatevorspannung für den Transistor 56 zu erzeugen, der daraufhin sperrt.

Im übrigen arbeitet die Schaltung in derselben Weise, wie dies im Zusammenhang mit Fig. 2 ausführlich dargelegt ist.

Die Schaltung nach Fig. 3 hat gegenüber der Schaltung nach Fig. 2 den Vorteil, bei wesentlich geringerer Ruheverlustleistung in dem Transistor 56, verglichen mit dem Widerstand 52 und der Z-Diode 53, wesentlich schneller den Transistor 35 in den leitenden Zustand steuern zu können. Seine Verlustleistung beim Einschalten kann dadurch wesentlich geringer gehalten werden, denn der Transistor 56 vermag einen hohen Stromimpuls zu liefern, während er im Anschluß daran, sobald die Spannung an dem Gate des Transistors 35 hinreichend angestiegen ist, sich selbst über den Spannungsabfall an der Z-Diode 58 sperrt. Somit kann auch ein sehr kleiner Ladekondensator 55 verwendet werden, der zusätzlich die Erzeugung eines kräftigen Ladestromstoßes für das Gate des Transistors 35 begünstigt, da einerseits für das Gate des Transistors 35 eine hohe Spannung benötigt wird, andererseits durch sein Einschalten aber die Spannung an dem Rückkopplungseingang 46 und damit an dem Widerstand 32 sinkt.

Bei sämtlichen Ausführungsbeispielen liegt der Bremswiderstand 32 zu der Serienschaltung aus dem Feldeffekttransistor 35 und dem Widerstand 36 parallel. Es ist jedoch auch möglich, wie dies durch eine gestrichelte Linie 64 angedeutet ist, den Bremswiderstand 32 zu dem Feldeffekttransistor 35 parallelzuschalten, d.h. der eigentliche Bremswiderstand setzt sich aus dem Widerstand 32 und dem Widerstand 36 zusammen und es wird durch den Feldeffekttransistor 35 immer nur ein Teil des Bremswiderstandes, nämlich der Widerstand 32, kurzgeschlossen. Das Schaltungsverhalten ändert sich dadurch nicht grundsätzlich. Lediglich die Bauteile müssen etwas anders dimensioniert werden.

Abweichend von den dargestellten Ausführungsbeispielen in den Fig. 2 und 3 kann der Widerstand 51 mit seinem heißen Ende an die Verbindungsleitung zwischen der Feldwicklung 6 und dem Anker 3 angeschlossen werden, womit dann der Wiedereinschaltpunkt von der Anker-EMK abhängig ist. Wenn, verglichen mit den Fig. 2 und 3, der Anker 3 und die Feldwicklung 6 ihre Plätze tauschen, ist der Wiedereinschaltpunkt von der Spannung an der Feldwicklung 6 abhängig, wenn, wie vorerwähnt, der Widerstand 51 mit seinem heißen Ende wiederum an der Verbindungsstelle zwischen dem Anker 3 und der Feldwicklung 6 angeschlossen ist.

## Patentansprüche

1. Schaltungsanordnung (2 ) zum vom Netz unabhängigen Bremsen von kleinen, einen Anker (3), einen Kollektor und eine Feldwicklung (6) aufweisenden Motoren (1), mit einer Umschalteinrichtung (12) zum Verpolen von Anker (3 ) und Feldwicklung (6 ) für den Motor- bzw. Bremsbetrieb, mit einem Leistungshalbleiter (35), der im Bremsbetrieb in Serie mit der Feldwicklung (6 ), dem Anker (3 ) und einem Stromfühler (36) liegt,und mit einer Steuerschaltung (41) für den Leistungshalbleiter (35), die mit ihrem Eingang (43) an dem Stromfühler (36) liegt, dadurch gekennzeichnet, daß die Steuerschaltung (41) Schmitt-Trigger-Charakteristik aufweist, daß das Abschaltkriterium der Strom durch den Leistungshalbleiter (35) ist und daß der Wiedereinschaltpunkt für den Leistungshalbleiter (35) von der Anker-EMK oder von der Spannung der Feldwicklung oder von der Summe der Spannung aus der Anker-EMK und der Spannung an der Feldwicklung gesteuert ist.

2. Schaltungsanordnung nach Anspruch 1, dadurch gekennzeichnet, daß der Stromfühler ein ohmscher Widerstand (36) ist, der zwischen dem Eingang (43) der Steuerschaltung (41) und einem Bezugspotential (34) liegt.

3. Schaltungsanordnung nach Anspruch 1, dadurch gekennzeichnet, daß die Steuerschaltung (41) einen Rückkopplungseingang (46) zum Einspeisen einer Spannung gegenüber einem Bezugspotential (34) aufweist und daß zwischen das Bezugspotential (34) und den Rückkopplungseingang (46) die Serienschaltung aus dem Anker (3 ) und zumindest einem Teil der Feldwicklung (6 ) geschaltet ist.

4. Schaltungsanordnung nach Anspruch 1, dadurch gekennzeichnet, daß zu dem Leistungshalbleiter (35) ein ohmscher Widerstand (32) parallel liegt.

5. Schaltungsanordnung nach Anspruch 1, dadurch gekennzeichnet, daß zu der Serienschaltung aus dem Leistungshalbleiter (35) und dem Stromfühler (36) ein ohmscher Widerstand (32) parallelgeschaltet ist.

6. Schaltungsanordnung nach Anspruch 1, dadurch gekennzeichnet, daß der Leistungshalbleiter (35) ein selbstsperrender MOS-Fet ist.

7. Schaltungsanordnung nach Anspruch 1, dadurch gekennzeichnet, daß die Steuerschaltung (41) einen Steuertransistor (48) enthält, dessen Basis bzw. Gate über einen Widerstand (49) an dem Eingang (43) der Steuerschaltung (41) liegt und dessen Basis bzw. Gate über einen weiteren Widerstand (51) an dem Rückkopplungseingang (46) der Steuerschaltung (41) angeschlossen ist.

8. Schaltungsanordnung nach Anspruch 1, dadurch gekennzeichnet, daß die Steuerschaltung (41) einen Stromversorgungseingang (46) aufweist und daß der Rückkopplungseingang (46) und der Stromversorgungseingang (46) in jedem Betriebszustand auf demselben Potential liegen.

9. Schaltungsanordnung nach Anspruch 1, dadurch gekennzeichnet, daß der Leistungshalbleiter (35) mit einem Anschluß an den Rückkopplungseingang (46) angeschlossen ist.

10. Schaltungsanordnung nach Anspruch 7, dadurch gekennzeichnet, daß der an den Eingang (43) bzw. den Rückkopplungseingang (46) angeschlossene Steuertransistor mit seinem Kollektor bzw. seiner Drain-Elektrode einen Ausgang (42) der Steuerschaltung (41) bildet, an der die Basis bzw. das Gate des Leistungshalbleiters (35) angeschlossen ist.

11. Schaltungsanordnung nach Anspruch 1, dadurch gekennzeichnet, daß die maximale Ausgangsspannung der Steuerschaltung (41) stabilisiert ist.

12. Schaltungsanordnung nach Anspruch 1, dadurch gekennzeichnet, daß die Steuerschaltung (41) zur Erzeugung der Steuerspannung für den Leistungshalbleiter (35) eine eigengesteuerte Stromquelle (56) enthält.

13. Schaltungsanordnung nach den Ansprüchen 7 und 11, dadurch gekennzeichnet, daß die Stromquelle einen selbstleitenden Feldeffekttransistor (56) aufweist, dessen Source-Elektrode über eine Vorspannung erzeugende Bauelemente (57, 58) mit dem Ausgang (42) der Steuerschaltung (41) verbunden ist und dessen Gateelektrode über eine Widerstandsdiodenanordnung (58, 59) an dem Ausgang (42) der Steuerschaltung (41) liegt und daß der Kollektor des Steuertransistors (48) an das Gate des Leistungshalbleiters (35) angeschlossen ist.

14. Schaltungsanordnung nach Anspruch 1, dadurch gekennzeichnet, daß der Leitungshalbleiter (35) Teil der Steuerschaltung (41) mit Schmitt-Trigger-Charakteristik ist.

15. Schaltungsanordnung nach Anspruch 1 , dadurch gekennzeichnet, daß der Kollektor des Steuertransistors (48) über eine in Sperrichtung betriebene Z-Diode (62) mit dem Eingang (43) der Steuerschaltung (41) verbunden ist.
